# EUROPÄISCHE PATENTSCHRIFT

(11) **EP 2 698 079 B1**
(45) Veröffentlichungstag und Bekanntmachung des Hinweises auf die Patenterteilung: **08.11.2017**
(21) Anmeldenummer: 13180414.8
(22) Anmeldetag: 14.08.2013
(51) Int. Cl.: A47C 20/04, G05B 19/04, H02H 3/12, H02J 13/00

(54) **Netzgebundene Stromversorgungseinheit**
Mains-linked power supply unit
Unité d'alimentation électrique reliée au réseau

(30) Priorität: 15.08.2012 DE 102012107482
(43) Veröffentlichungstag der Anmeldung: 19.02.2014
(73) Patentinhaber: DewertOkin GmbH, 32278 Kirchlengern (DE)
(72) Erfinder: Hille, Armin, 33659 Bielefeld (DE)
(74) Vertreter: Dantz, Jan Henning

(56) Entgegenhaltungen:
- DE-U1- 20 314 217
- DE-U1- 29 816 022
- DE-U1-202011 000 443

## Beschreibung

Die vorliegende Erfindung betrifft eine netzgebundene Stromversorgungseinheit, insbesondere für einen Möbelantrieb, mit einer Netzzuleitung, die mit einem Netzstecker verbunden ist, wobei die Netzzuleitung über eine Steckverbindung mit einem Netzgerät verbunden ist, und das Netzgerät einen Transformator aufweist, welcher primärseitig durch die Steckverbindung mit der Netzzuleitung verbindbar ist und die netzseitige Wechselspannung in eine sekundärseitige Kleinspannung zum Betrieb eines elektrischen Verbrauchers transformiert.

Es sind Netzzuleitungen und Netzgeräte bekannt, welche fest oder steckbar miteinander verbunden sind. Besonders vorteilhaft sind steckbare Netzzuleitungen mit normierten Steckern, wobei der Netzstecker der nationalen Landesnorm entspricht und wobei die Gerätesteckverbindung unabhängig der nationalen Landesnorm unverändert bleibt.

Zudem sind Netzgeräte bekannt, welche einen Transformator in Form eines EI-Kern-Transformators oder eines Ringkern-Transformators aufweisen oder als elektronischer Transformator in Form eines Schaltnetzteils ausgebildet sind. Ferner sind sogenannte Netzfreischaltungen bekannt (DE 41 39 647), wobei der Netzstecker ein Kleingehäuse aufweist, in dem ein Relaisschalter zur Unterbrechung des primärseitigen Stromkreises des Transformators angeordnet ist, wenn sich ein Möbelantrieb oder ein Verbraucher des Möbels im Ruhezustand befindet und zeitweilig nicht benutzt wird.

DE 298 16 022 U1 betrifft eine Verstellvorrichtung zur Verstellung eines Möbels und umfasst eine wenigstens einen Gleichspannungs-Stellmotor aufweisende Antriebseinrichtung, der eine netzgebundene Spannungsquelle zugeordnet ist, eine Bedienungseinheit mit wenigstens einer Schalteinrichtung zum Betätigen des wenigstens einen Stellmotors, ein in ein Steckernetzteil oder in eine Zuleitung zur netzgebundenen Spannungsquelle geschaltetes Netzfreischaltungsrelais, und ein von der wenigstens einen Schalteinrichtung zum Betätigen des wenigstens einen Stellmotors der Bedienungseinheit getrenntes Schaltmittel zur Betätigung des Netzfreischaltungsrelais.

DE 20 2011 000443 U1 beschreibt einen elektromotorischen Möbelantrieb mit einer Energieversorgungseinrichtung, einer Handbedienung und mit einer Netzfreischaltungseinrichtung, die von einem ausgeschalteten Zustand in einen eingeschalteten Zustand und zurück schaltbar ist, zum Verstellen von beweglichen Möbelbauteilen relativ zueinander, wobei der elektromotorische Möbelantrieb wenigstens einen drehrichtungsumkehrbaren Elektromotor aufweist, wobei jedem Elektromotor ein Drehzahlreduziergetriebe nachgeschaltet ist und wobei jedem Drehzahlreduziergetriebe ein weiteres Getriebe nachgeschaltet ist, und wobei die Energieversorgungseinrichtung einen Netzanschluss aufweist, welcher durch die Netzfreischaltungseinrichtung mit dem Netz verbindbar ausgebildet ist, wobei die Energieversorgungseinrichtung die netzseitige Eingangsspannung in mindestens eine ausgangsseitige Kleinspannung transformiert, und einen Trenntransformator oder eine Übertragungseinheit zur galvanischen Trennung zwischen der netzgebundenen Eingangsseite und der kleinspannungsgebenden Ausgangsseite zum Betrieb des elektromotorischen Möbelantriebs aufweist, wobei die Netzfreischaltungseinrichtung eine Hilfsversorgungseinrichtung, mindestens einen Netztrennschalter, der in dem ausgeschalteten Zustand geöffnet und in dem eingeschalteten Zustand geschlossen ist, und einen aufladbaren Hilfsleistungsspeicher aufweist. Der Hilfsleistungsspeicher ist von der Energieversorgungseinrichtung entkoppelt, mit der Hilfsversorgungseinrichtung verbunden und von der Hilfsversorgungseinrichtung aufladbar.

Als besonders nachteilig hat sich heraus gestellt, dass die Komponenten der Stromversorgungseinheit wie Netzzuleitung, Netzgerät und Netzfreischaltung auf Wünsche des Marktes und des Kunden relativ zueinander aufwändig angepasst werden müssen. Aus Montagegründen wurde beispielsweise eine nicht steckbare Netzzuleitung gewählt, wenn der Zusatz einer Netzfreischaltung gewünscht war. Das führt aber wieder zu einem hohen logistischen Aufwand, da die Netzfreischaltung mit unterschiedlichen Netzsteckern der jeweiligen nationalen Landesnorm ausgestattet sein muss, während ebenso Kundenwünsche umgesetzt werden sollen, indem beispielsweise Netzgeräte mit Ringkerntransformator oder mit einem Schaltnetzteil gewünscht sind.

Der Erfindung liegt daher die Aufgabe zu Grunde, eine netzgebundene Stromversorgungseinheit der eingangs genannten Art zu schaffen, welche die oben genannten Nachteile nicht mehr aufweist, einfach montiert und umgerüstet werden kann, und die Teilevielfalt reduziert wird.

Diese Aufgabe wird mit einer netzgebundenen Stromversorgungseinheit mit den Merkmalen des Anspruches 1 gelöst.

Die Lösung der Aufgabenstellung sieht vor, dass das Netzgerät einen Anschluss für eine Steuerleitung zu einer Netzfreischaltung aufweist, so dass die Stromversorgungseinheit wahlweise mit einer Netzfreischaltung oder ohne Netzfreischaltung betrieben werden kann. Dadurch können die Komponenten der Stromversorgungseinheit wie Netzgerät, Netzzuleitung und Netzfreischaltung jeweils eine einheitliche Bauform aufweisen, so dass die Stromversorgungseinheit für Ausführungen zum Betrieb mit Netzfreischaltung und für Ausführungen zum Betrieb ohne Netzfreischaltung ausbildbar ist, und dazu das Netzgerät und die Netzzuleitung eine einheitliche Gerätesteckverbindung aufweist. Es kann lediglich der Netzstecker unterschiedliche ausgebildet sein, der wahlweise mit oder ohne Netzfreischaltung ausgebildet ist.

Vorzugsweise weist das Netzgerät eine erste Steckerbuchse für die Steckverbindung mit der Netzzuleitung und eine zweite Steckerbuchse für den Anschluss einer Steuerleitung für die Netzfreischaltung aufweist. Bei dem Betrieb der Stromversorgungseinheit ohne Netzfreischaltung kann dann die Steckerbuchse für die Steuerleitung einfach frei gelassen werden, so dass die Funktion der Netzfreischaltung nicht zum Einsatz kommt. Sollte die Stromversorgungseinheit dann umgerüstet werden, beispielsweise aufgrund von gesetzlichen lichen Vorgaben, kann durch Austausch des Netzsteckers und dem Anschluss der Steuerleitung an die zweite Steckerbuchse die Stromversorgungseinheit mit der Netzfreischaltung betrieben werden.

Gemäß einer weiteren Ausführungsform ist der Netzstecker über eine Netzzuleitung und eine Steuerleitung für die Netzfreischaltung mit dem Netzgerät verbunden. Dabei können die Netzzuleitung und die Steuerleitung von dem Netzstecker bis zu einer Zusammenführung gemeinsam geführt sein, insbesondere in einer gemeinsamen Kabelhülle. Hinter der Zusammenführung können Netzzuleitung und Steuerleitung über getrennte Steckverbindungen an das Netzgerät angeschlossen sein. Es ist alternativ auch möglich, die Zusammenführung als Steckverbindung für die Netzzuleitung und gleichzeitig auch für die Verbindung mit der Steuerleitung für die Netzfreischaltung auszubilden, wobei dann an dem Netzgerät eine entsprechende Steckerbuchse vorgesehen werden muss.

Als Netzgerät im Sinne der vorliegenden Anmeldung werden folgende Geräte angesehen:
∘ Bodentransformator mit wenigstens einem Transformator (EI-Kerntransformator, Ringkerntransformator, elektronischer Transformator bzw. Schaltnetzteil) mit Kleinspannungsausgang als Gleichspannung, in Sonderbauform auch mit einem Wechselspannungsausgang
∘ Verstellantrieb eines Möbels (Einzelantrieb mit einem Motor oder Doppelantrieb mit zwei Motoren in einem Gehäuse), wobei der Transformator mit dem Gehäuse aufgenommen ist (z.B. außen angesetzt) oder in dem Gehäuse aufgenommen ist
∘ Steuerung mit Steuerrelais oder Steuerschalter zum Schalten des Betriebsstroms von Verbrauchern, wobei der Transformator mit der Steuerung (z.B. neben der Steuerplatine oder auf der Steuerplatine) oder in dem Gehäuse der Steuerung angeordnet ist
∘ Netz-Funkempfänger oder Netz-Infrarotempfänger, welcher einen Netzschalter steuert. Bei Empfang von Steuersignalen steuert der Netz-Empfänger den Netzschalter, welcher Netzspannung zu einem Verbraucher oder zu einem weiteren Netzgerät schaltet.

Zusammengefasst sind als Netzgerät jene Geräte definiert, welche einen Netzspannungseingang aufweisen, oder welche direkt mit der Netzspannung betreibbar sind, oder welche direkt an der Netzspannung angeschlossen sind. Als Verbraucher für die erfindungsgemäße Stromversorgungseinheit können folgende Vorrichtungen Verwendung finden:
∘ Lampen und Leuchten
∘ elektromotorische Verstellantriebe für Möbel, welche einen oder mehrere Elektromotore aufweisen. Dabei ist der jeweilige Elektromotor mit einen Drehzahlreduziergetriebe gekoppelt und in einer weiteren Ausführungsform können Teile des elektromotorischen Verstellantrieb in einem gemeinsamen Gehäuse angeordnet sein
∘ Heizungen, Heizeinrichtungen, Kühlungen, Kühleinrichtungen; zum Einbau in Teile der Sitz- oder der Liegefläche
∘ Massagegeräte, welche a) Vibrationsmassagemotore und/oder b) elektromotorisch betriebene mechanische Bewegungseinheiten aufweisen
∘ Funkempfänger und/oder Infrarotempfänger zum Empfang von Steuersignalen durch eine Handfernbedienung des Benutzers und zur Weiterleitung der empfangenen Signale zu einem Steuerschalter (Halbleiterschalter oder Relaisschalter) des jeweiligen Verbrauchers
∘ Geräte der Unterhaltungselektronik wie CD-, DVD-, TV-, Audio-, Hifi-Geräte

Eine Gerätesteckverbindung: ist dabei eine mit dem Netzgerät verbundener Steckanschluß. Dieser ist als Stecker-Steckdoseneinheit ausgebildet, wobei einer der Steckerpartner vorzugsweise fest mit dem Netzgerät verbunden ist und der andere Steckerpartner mit der Netzzuleitung verbunden ist.

Die Steuerleitung der Netzfreischaltung steuert das Ein- und Ausschalten eines Netzfreischalters, welcher in der Netzfreischaltung eingesetzt ist. Der Netzfreischalter hat wenigstens einen Schalterkontakt, womit zumindest eine Leitung des zweileitungsaufweisenden Netzes geschaltet wird. Im Falle eines als Relais ausgebildeten Netzfreischalters stehen die Adern der Steuerleitung mit dessen Relaisspule in elektrischer Verbindung.

Eine Netzfreischaltung im Sinne der vorliegenden Anmeldung ist eine Schalteinheit und weist den Netzfreischalter auf und ist typischerweise zwischen dem Netzstecker und den primärseitigen Anschlüssen des Transformators angeordnet. Idealerweise ist sie als Steckerteil ausgebildet und kann zusammen mit dem Netzstecker in eine Netzsteckdose eingesetzt werden. Gemäß einer alternativen Ausführung ist die Netzfreischaltung innerhalb der Netzzuleitung angeordnet. Gemäß einer weiteren Ausführungsform ist die Netzfreischaltung vor den Primäranschlüssen des Transformators angeordnet.

Die Erfindung wird nachfolgen anhand eines Ausführungsbeispiels mit Bezug auf die beigefügten Zeichnungen näher erläutert. Es zeigen:
- Figur 1: eine perspektivische Ansicht einer netzgebundenen Stromversorgungseinheit mit einer Netzfreischaltung;
- Figur 2: eine Ansicht der netzgebundenen Stromversorgungseinheit der Figur 1 mit abgenommener Netzzuleitung;
- Figur 3: eine perspektivische Ansicht der netzgebundenen Stromversorgungseinheit der Figur 1 mit einem modifizierten Netzstecker; und
- Figuren 4 und 5: zwei Ansichten unterschiedlicher Steckverbinder für eine Stromversorgungseinheit der Figur 1.

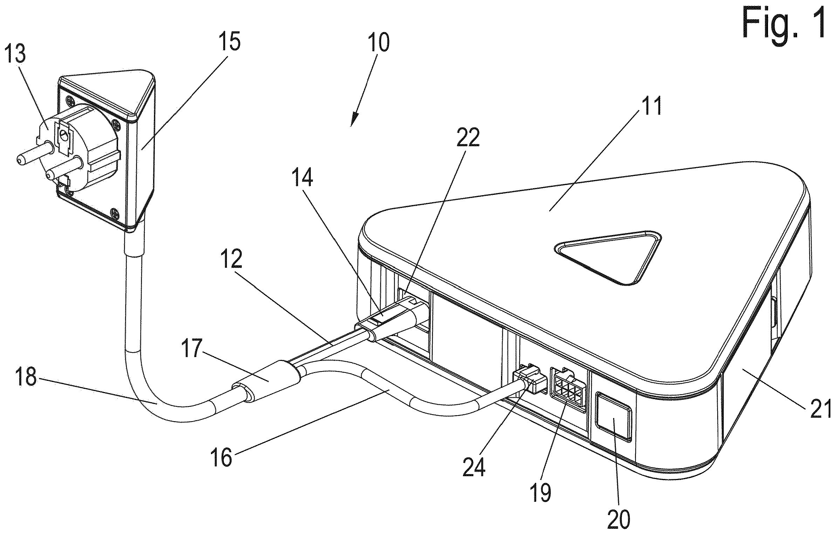

Die Figur 1 zeigt eine Stromversorgungseinheit 10 umfassend ein Netzgerät 11, eine Netzzuleitung 12 und einer Netzfreischaltung 15, die an oder in einem Netzstecker 13 angeordnet ist. Dabei wird die Netzfreischaltung 15 mit angesetztem Netzstecker 13 direkt in eine Netzsteckdose eingesetzt und weist einen Kabelausgang in Form einer Netz- und Steuerleitung 18 auf. Die Netz- und Steuerleitung 18 geht in eine Zusammenführung 17 über, welche die Netzzuleitung 12 und die Steuerleitung 16 zusammen führt. Das jeweilige freie Enden der Netzzuleitung 12 und der Steuerleitung 16 weist einen Steckverbinder 14 und 24 auf, womit die jeweilige Leitung steckbar mit dem Netzgerät 11 verbunden ist. Das Netzgerät 11 weist in dieser Ausführungsform einen nicht näher dargestellten Transformator auf, sowie ein Batteriefach 21, welches zur Aufnahme einer Batterie als Hilfsstromquelle ausgebildet ist und durch einen Verschlussdeckel verschließbar ist. Ferner ist noch eine Taste 20 vorgesehen, welche mit einem nicht näher dargestellten elektrischen Schalter des Netzgerätes 11 verbunden ist.

Bei manueller Betätigung der Taste 20 schließt der damit in Wirkverbindung stehende Schalter einen Stromkreis, in welchem die Batterie des Batteriefachs 21 eingebunden ist. In diesem Stromkreis können elektrische Verbraucher eingebunden sein, wenn durch Drücken der Taste 20 eine Art elektrischer Notbetrieb von ausgewählten Verbrauchern erfolgen soll. Es kann aber auch der Steueranschluss des Netzfreischalters der Netzfreischaltung 15 in diesem Stromkreis integriert sein. Damit kann bei Tastendruck der Taste 20 an den Steueranschluss des Netzfreischalters elektrische Energie aus der Batterie angelegt werden, so dass sich der Schaltausgang bzw. die Schaltstellung des Netzfreischalters ändert.

In einer bevorzugten Ausführungsform des Netzgerätes 11 ist dies als Energieversorgungsgerät ausgebildet, wobei der nicht näher dargestellte Transformator eine Kleinspannung für Verbraucher und/oder für elektromotorische Verstellantriebe an dem Anschluss 19 bereitstellt, welcher in dieser Ausführungsform Steckkontakte aufweist. Andere Steckkontakte des Anschlusses 19 sind mit Adern der Steuerleitung 16 und mit einem nicht näher dargestellten Funkempfänger und/oder mit einer nicht näher dargestellten Handfernbedienung elektrisch leitend verbunden. Ein Tastendruck der nicht näher dargestellten Handfernbedienung bewirkt das Anlegen eines elektrischen Signals an Kontakte des Anschlusses 19, wobei das elektrische Signal sodann der Steuerleitung 16 folgt, die mit dem Eingang eines Netzfreischalters der Netzfreischaltung 15 elektrisch verbunden ist. Das Drücken einer Taste der Handfernbedienung schaltet die Stromversorgungseinheit 10 in den Betriebszustand des regulären Betriebs um, indem die Netzfreischaltung 15 elektrische Energie aus dem Netz über die Netzzuleitung 12 zu dem Netzgerät 11 schaltet, so dass in diesem Betriebszustand angeschlossene Verbraucher mit Energie aus dem Netz betrieben werden können.

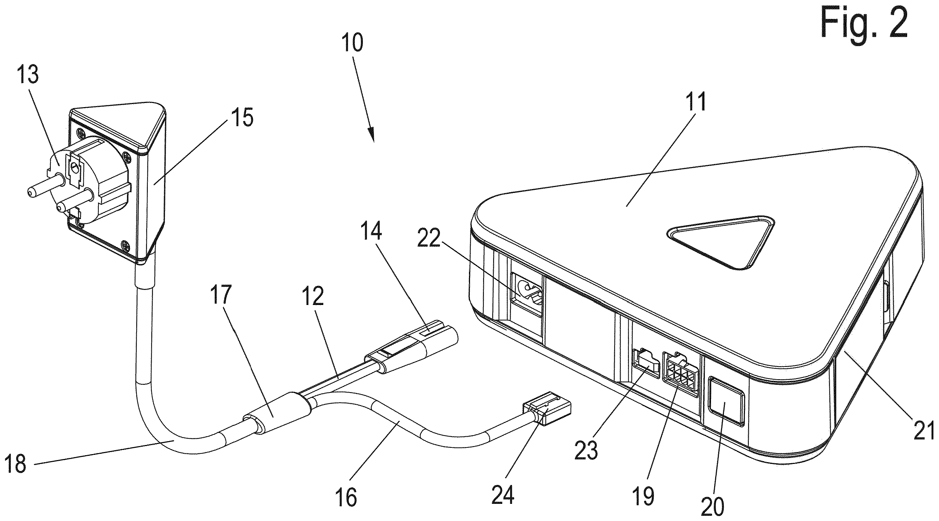

Die Figur 2 unterscheidet sich von der Darstellung der Figur 1 nur dadurch, dass die Netzzuleitung 12 und die Steuerleitung 16 vom Netzgerät 11 elektrisch getrennt sind, wobei der Steckverbinder 14 der Netzzuleitung 12 aus der ersten Steckerbuchse 22 abgezogen wurde und ein Steckverbinder 24 an der Steuerleitung 16 aus einer zweiten Steckerbuchse 23 des Netzgerätes 11 abgezogen wurde.

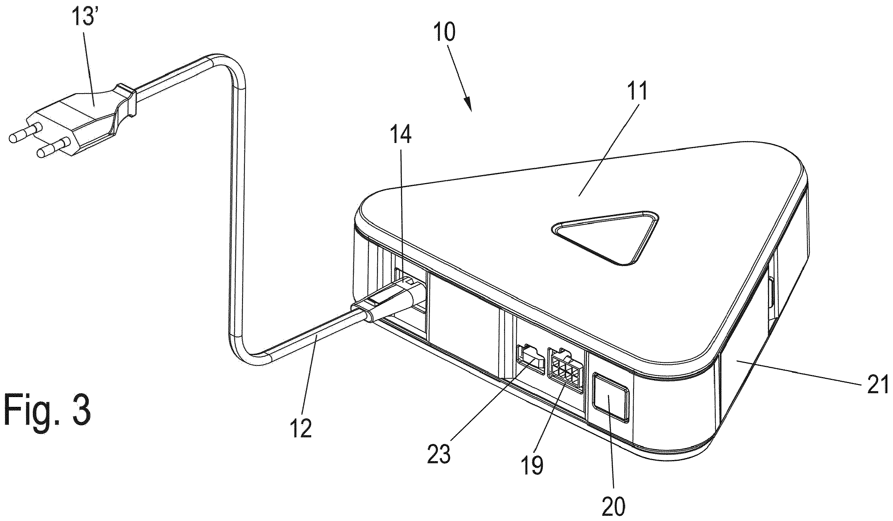

In der Figur 3 ist die Stromversorgungseinheit 10 ohne den Betrieb einer Netzfreischaltung 15 gezeigt. Die Stromversorgungseinheit 10 weist einen modifizierten Netzstecker 13' auf, der mit einer Netzzuleitung 12 verbunden ist, die über die Gerätesteckverbindung 14 und die erste Steckerbuchse 22 mit dem Netzgerät 11 verbunden ist. Das andere freie Ende der Netzzuleitung 12 ist mit einem Netzstecker 13 zur steckbaren Verbindung mit einer Netzsteckdose ausgebildet. Die zweite Steckerbuchse 23 des Netzgerätes 11 bleibt bei dieser Betriebsart der Stromversorgungseinheit 10 frei.

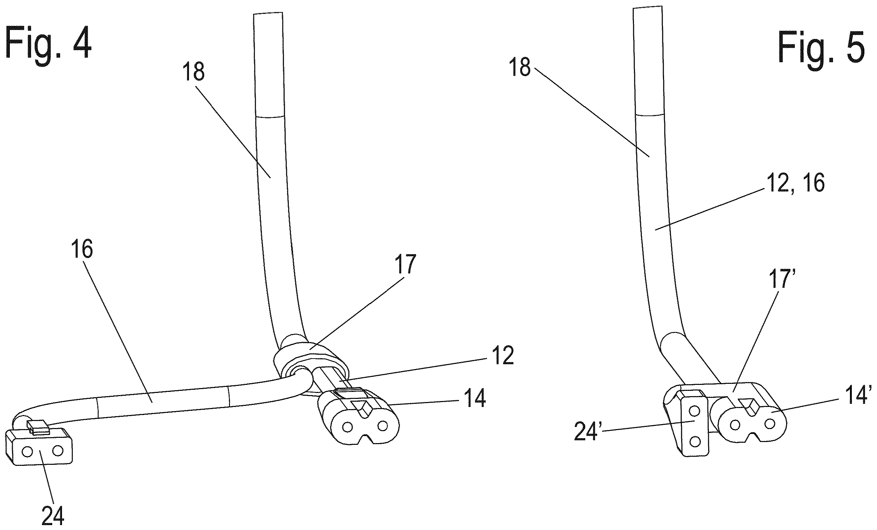

Die Figur 4 illustriert die Netzzuleitung 12, die Steuerleitung 16, die Zusammenführung 17 der Netzzuleitung 12 und der Steuerleitung 16, gemäß den Ausführungen nach den Figuren 1 und 2, jedoch ohne dem Netzgerät 11 und aus einer anderen Blickrichtung. Dabei ist der Steckverbinder 14 bzw. der Stecker der Netzzuleitung 12 beabstandet von dem Steckverbinder 24 bzw. Stecker der Steuerleitung 16 angeordnet. Die Steckverbinder 14 und 24 sind in diesem Ausführungsbeispiel jeweils 2 polig ausgebildet sind. Die Steckverbinder 14 der Netzzuleitung 12 ist hierbei normiert nach IEC 60320 mit dem SteckerBuchsen-Typ C7 bzw. C8 ausgebildet.

Die Figur 5 illustriert eine andere Ausführungsform für eine Steckverbindung mit dem Netzgerät 11, wobei eine Zusammenführung 17' für die Netzzuleitung 12 und die Steuerleitung 16 als Steckverbinder 14' und 24' ausgebildet ist. Dabei werden die Netzzuleitung 12 und die Steuerleitung 16 in der Netz- und Steuerleitung 18 gemeinsam zu einer Netzfreischaltung 15 gemäß den Figuren 1 und 2 geführt. In besonders vorteilhafter Weise bilden die Steckanschlüsse der Netzzuleitung 12 und der Steuerleitung 16 eine Art Kombinationssteckverbindung, welche in diesem Ausführungsbeispiel Kombinationsstecker ausgebildet sind. Der andere Steckerpartner wäre dann eine Kombinationsbuchse, welche mit dem Netzgerät 11 verbunden oder an dem Netzgerät 11 ausgebildet ist. In bevorzugter Weise weist das Netzgerät 11 eine Kombinationsbuchse ausgebildete Gerätesteckverbindung auf, so dass der an der Zusammenführung 17' ausgebildete Kombinationsstecker in das Netzgerät 11 eingesteckt werden kann. Der geringe Abstand zwischen dem Steckanschluß der Netzzuleitung 12 und dem Steckanschluß der Steuerleitung 16 macht es möglich, dass das Netzgerät 11 jederzeit mit einer Netzzuleitung gemäß der Darstellung nach Figur 3 verwendet werden kann.

Zusammengefasst kann hervorgehoben werden, dass die Komponenten der Stromversorgungseinheit 10, wie das Netzgerät 11, die Netzzuleitung 12 und die Netzfreischaltung 15 jeweils eine einheitliche Bauform aufweisen, so dass die Stromversorgungseinheit 10 für Ausführungen zum Betrieb mit einer Netzfreischaltung 15 und für Ausführungen zum Betrieb ohne eine Netzfreischaltung 15 ausbildbar ist, und dazu das Netzgerät 11 ohne Umrüstung in unterschiedlicher Weise betrieben werden kann.

### Bezugszeichenliste

- 10: Stromversorgungseinheit
- 11: Netzgerät
- 12: Netzzuleitung
- 13: Netzstecker
- 14: Gerätesteckverbindung
- 15: Netzfreischaltung
- 16: Steuerleitung
- 17: Zusammenführung
- 18: Netz- und Steuerleitung
- 19: Anschluß
- 20: Taste
- 21: Batteriefach
- 22: erste Steckerbuchse
- 23: zweite Steckerbuchse
- 24: Steckverbinder

## Patentansprüche

1. Netzgebundene Stromversorgungseinheit (10), insbesondere für einen Möbelantrieb, mit einer Netzzuleitung (12), die mit einem Netzstecker (13) verbunden ist, wobei die Netzzuleitung (12) über eine Steckverbindung (14) mit einem Netzgerät (11) verbindbar ist, und das Netzgerät (11) einen Transformator aufweist, welcher primärseitig durch die Steckverbindung (14) mit der Netzzuleitung (12) verbindbar ist und die netzseitige Wechselspannung in eine sekundärseitige Kleinspannung zum Betrieb eines elektrischen Verbrauchers transformiert, wobei das Netzgerät (11) einen Anschluss für eine Steuerleitung (16) zu einer Netzfreischaltung (15) aufweist, so dass die Stromversorgungseinheit (10) wahlweise mit einer Netzfreischaltung (15) oder ohne Netzfreischaltung (15) betrieben werden kann, wobei die Steuerleitung (16) einen Steckverbinder (24) aufweist, über welchen die Steuerleitung (16) steckbar mit dem Netzgerät (11) verbindbar ist, wobei die Netzfreischaltung (15) an oder in dem ersten Netzstecker (13) angeordnet ist, und wobei die Stromversorgungseinheit (10) einen zweiten Netzstecker (13') umfasst, der über eine zugeordnete Netzzuleitung (12) und eine Gerätesteckverbindung (14) mit dem Netzgerät (11) verbindbar ist und einen Betrieb der Stromversorgungseinheit (10) ohne Netzfreischaltung (15) ermöglicht.

2. Stromversorgungseinheit nach Anspruch 1, **dadurch gekennzeichnet, dass** das Netzgerät (11) eine erste Steckerbuchse (22) für die Steckverbindung (14) mit der Netzzuleitung (12) und eine zweite Steckerbuchse (24) für den Anschluss einer Steuerleitung (16) für die Netzfreischaltung (15) aufweist.

3. Stromversorgungseinheit nach Anspruch 1 oder 2, **dadurch gekennzeichnet, dass** der Netzstecker (13) über eine Netzzuleitung (12) und eine Steuerleitung (16) für die Netzfreischaltung (15) mit dem Netzgerät verbunden ist.

4. Stromversorgungseinheit nach Anspruch 3, **dadurch gekennzeichnet, dass** die Netzzuleitung (12) und die Steuerleitung (16) von dem Netzstecker (13) bis zu einer Zusammenführung (17, 17') gemeinsam geführt sind, insbesondere in einer gemeinsamen Kabelhülle.

5. Stromversorgungseinheit nach Anspruch 4, **dadurch gekennzeichnet, dass** die Zusammenführung (17') eine Steckverbindung (14') für die Netzzuleitung (12) und einen integral mit der Zusammenführung (17') ausgebildeten Stecker (24) für die Verbindung mit der Steuerleitung (16) für die Netzfreischaltung (15) aufweist.

6. Stromversorgungseinheit nach einem der vorhergehenden Ansprüche, **dadurch gekennzeichnet, dass** in dem Netzgerät (11) eine Hilfsspannungsquelle und ein Schalter für die Netzfreischaltung (15) angeordnet sind, und über die Steuerleitung (16) die an oder in dem Netzstecker (13) angeordnete Netzfreischaltung (15) schaltbar ist.

7. Einheit aus einer Stromversorgungseinheit (10) nach einem der vorhergehenden Ansprüche mit einem zweiten Netzstecker (13'), der einen Betrieb des Netzgerätes (11) ohne Netzfreischaltung (15) ermöglicht.

8. Möbelantrieb, insbesondere zum Verstellen von bewegbaren Möbelteilen eines Sitz- oder Liegemöbels, **dadurch gekennzeichnet, dass** der Möbelantrieb eine Stromversorgungseinheit nach einem der vorhergehenden Ansprüche aufweist.

## Claims

1. A mains-connected power supply unit (10), in particular for a furniture drive, having a mains supply line (12) which is connected to a mains plug (13), wherein the mains supply line (12) is connectible to a power unit (11) via a plug connection (14), and the power unit (11) has a transformer which is connectible on the primary side by the plug connection (14) to the mains supply line (12) and transforms the alternating voltage on the mains side into a low voltage on the secondary side for operating an electric consumer, wherein the power unit (11) has a connection for a control line (16) to a mains cut-off (15), so that the power supply unit (10) can be operated selectively with mains cut-off (15) or without mains cut-off (15), wherein the control line (16) has a plug connector (24), via which the control line (16) is connectible in a pluggable manner to the power unit (11), wherein the mains cut-off (15) is arranged on or in the first mains plug (13), and wherein the power supply unit (10) has a second mains plug (13') which is connectible via an associated mains supply line (12) and a device plug connection (14) to the power unit (11), and allows operation of the power supply unit (10) without mains cut-off (15).

2. A power supply unit according to claim 1, **characterized in that** the power unit (11) has a first plug socket (22) for the plug connection (14) with the mains supply line (12) and a second plug socket (24) for the connection of a control line (16) for the mains cut-off (15).

3. A power supply unit according to claim 1 or 2, **characterized in that** the mains plug (13) is connected to the power unit via a mains supply line (12) and a control line (16) for the mains cut-off (15).

4. A power supply unit according to claim 3, **characterized in that** the mains supply line (12) and the control line (16) are guided together from the mains plug (13) to a junction (17, 17'), in particular in a common cable sheath.

5. A power supply unit according to claim 4, **characterized in that** the junction (17') comprises a plug connection (14') for the mains supply line (12) and a plug (24) integrally formed with the junction (17') for connection with the control line (16) for the mains cut-off (15).

6. A power supply unit according to one of the preceding claims, **characterized in that** an auxiliary voltage source and a switch for the mains cut-off (15) are arranged in the power unit (11), and the mains cut-off (15) arranged on or in the mains plug (13) is switchable via the control line (16).

7. A unit consisting of a power supply unit (10) according to one of the preceding claims, having a second mains plug (13') which allows operation of the power unit (11) without mains cut-off (15).

8. A furniture drive, in particular for adjusting movable furniture parts of a piece of seating or reclining furniture, **characterized in that** the furniture drive has a power supply unit according to one of the preceding claims.

## Revendications

1. Unité d'alimentation électrique (10) raccordée secteur, en particulier pour un entraînement de meuble, avec une ligne d'alimentation par le secteur (12) reliée à un connecteur secteur (13), la ligne d'alimentation par le secteur (12) pouvant être reliée par une connexion enfichée (14) à un bloc secteur (11) et le bloc secteur (11) présentant un transformateur qui peut être relié sur son côté primaire, par la connexion enfichée (14), à la ligne d'alimentation par le secteur (12) et qui transforme la tension de courant alternatif du secteur en basse tension du côté secondaire pour faire fonctionner un consommateur électrique, le bloc secteur (11) présentant un branchement pour une ligne de commande (16) vers un circuit de déconnexion du secteur (15), de sorte que l'unité d'alimentation électrique (10) peut fonctionner, au choix, avec un circuit de déconnexion du secteur (15) ou sans circuit de déconnexion du secteur (15), la ligne de commande (16) présentant un connecteur enfichable (24) par lequel la ligne de commande (16) peut être connectée par enfichage au bloc secteur (11), le circuit de déconnexion du secteur (15) étant disposé sur ou dans le premier connecteur secteur (13) et l'unité d'alimentation électrique (10) comprenant un deuxième connecteur secteur (13') qui peut être connecté au bloc secteur (11) par l'intermédiaire d'une ligne d'alimentation par le secteur (12) correspondante et d'une connexion enfichée d'appareil (14) et qui permet un fonctionnement de l'unité d'alimentation électrique (10) sans circuit de déconnexion du secteur (15).

2. Unité d'alimentation électrique selon la revendication 1, **caractérisée en ce que** le bloc secteur (11) présente une première prise femelle de connecteur (22) pour la connexion enfichée (14) avec la ligne d'alimentation par le secteur (12) et une deuxième prise femelle de connecteur (24) pour le raccordement d'une ligne de commande (16) pour le circuit de déconnexion du secteur (15).

3. Unité d'alimentation électrique selon la revendication 1 ou 2, **caractérisée en ce que** le connecteur secteur (13) est relié au bloc secteur par une ligne d'alimentation par le secteur (12) et une ligne de commande (16) pour le circuit de déconnexion du secteur (15).

4. Unité d'alimentation électrique selon la revendication 3, **caractérisée en ce que** la ligne d'alimentation par le secteur (12) et la ligne de commande (16) sont guidées ensemble par le connecteur secteur (13) jusqu'à un regroupement (17, 17'), en particulier dans une gaine de câble commune.

5. Unité d'alimentation électrique selon la revendication 4, **caractérisée en ce que** le regroupement (17') présente une connexion enfichée (14') pour la ligne d'alimentation par le secteur (12) et un connecteur (24) solidaire du regroupement (17') pour la liaison avec la ligne de commande (16) pour le circuit de déconnexion du secteur (15).

6. Unité d'alimentation électrique selon l'une des revendications précédentes, **caractérisée en ce qu'**il est prévu dans le bloc secteur (11) une source de tension auxiliaire et un commutateur pour le circuit de déconnexion du secteur (15) et **en ce que** le circuit de déconnexion du secteur (15) disposé sur le connecteur secteur (13) peut être commuté à l'aide de la ligne de commande (16).

7. Unité composée d'une unité d'alimentation électrique (10) selon l'une des revendications précédentes avec un deuxième connecteur secteur (13') qui permet un fonctionnement du bloc secteur (11) sans circuit de déconnexion du secteur (15).

8. Entraînement de meuble, en particulier pour le déplacement de parties mobiles d'un siège ou d'un meuble de couchage, **caractérisé en ce que** l'entraînement de meuble présente une unité d'alimentation électrique selon l'une des revendications précédentes.
